# EUROPÄISCHE PATENTSCHRIFT

(11) **EP 1 583 957 B1**
(45) Veröffentlichungstag und Bekanntmachung des Hinweises auf die Patenterteilung: **18.02.2009**
(21) Anmeldenummer: 02808114.9
(22) Anmeldetag: 14.11.2002
(51) Int. Cl.: G01N 27/414

(54) **IONENSENSITIVER FELDEFFEKTTRANSISTOR UND VERFAHREN ZUM HERSTELLEN EINES IONENSENSITIVEN FELDEFFEKTTRANSISTORS**
ION-SENSITIVE FIELD EFFECT TRANSISTOR AND METHOD FOR PRODUCING AN ION-SENSITIVE FIELD EFFECT TRANSISTOR
TRANSISTOR A EFFET DE CHAMP ISFET ET PROCEDE POUR PRODUIRE UN TRANSISTOR A EFFET DE CHAMP ISFET

(43) Veröffentlichungstag der Anmeldung: 12.10.2005
(73) Patentinhaber: Fraunhofer-Gesellschaft zur Förderung der angewandten Forschung e.V., 80686 München (DE)
(72) Erfinder: KURTH, Eberhard, 01468 Moritzburg (DE); KUNATH, Christian, 01108 Dresden (DE); GRÜGER, Heinrich, 01109 Dresden (DE)
(74) Vertreter: Schoppe, Fritz
(86) Internationale Anmeldenummer: PCT/EP2002/012785
(87) Internationale Veröffentlichungsnummer: WO 2004/044572

(56) Entgegenhaltungen:
- DE-C- 4 430 811
- DE-C- 19 514 251
- US-A1- 2002 109 161
- US-B1- 6 399 208
- US-B1- 6 465 334
- US-B1- 6 479 404
- WILK G D ET AL: "HAFNIUM AND ZIRCONIUM SILICATES FOR ADVANCED GATE DIELECTRICS" JOURNAL OF APPLIED PHYSICS, AMERICAN INSTITUTE OF PHYSICS. NEW YORK, US, Bd. 87, Nr. 1, 1. Januar 2000 (2000-01-01), Seiten 484-492, XP000947641 ISSN: 0021-8979
- KULLICK T ET AL: "Diamond-like carbon-gate pH-ISFET" SENSORS AND ACTUATORS B, ELSEVIER SEQUOIA S.A., LAUSANNE, CH, Bd. 44, Nr. 1-3, 1. Oktober 1997 (1997-10-01), Seiten 441-445, XP004117156 ISSN: 0925-4005

## Beschreibung

Die vorliegende Erfindung bezieht sich auf Feldeffekttransistoren und insbesondere auf ionensensitive Feldeffekttransistoren, sowie auf ein Verfahren zum Herstellen derselben.

Ionensensitive Feldeffekttransistoren (ISFET) dienen als Erfassungselemente beispielsweise bei einer Messung eines pH-Wertes, einer Messung von Ionenkonzentrationen oder speziellen Stoffkonzentrationen in Lösungen unterschiedlicher Zusammensetzung und Leitfähigkeiten. Anwendungsgebiete von ionensensitiven Feldeffekttransistoren zum kontinuierlichen Nachweis von Konzentrationen sind die Prozessmesstechnik, die Analytik, die industrielle Prozessüberwachung oder die Umweltüberwachung, wobei Messungen typischerweise in wässrigen Lösungen oder organischen Mischungen durchgeführt werden. Dabei kommt es insbesondere auf eine hochpräzise Konzentrationserfassung und eine minimale Langzeitdrift des Sensors, in Verbindung mit einem akzeptablen Preis, an.

Die Messungen von Ionenkonzentrationen in wässrigen Medien werden traditionell mit Glaselektroden sowohl in der Prozessmesstechnik als auch in der Labormesstechnik durchgeführt. In vielen aggressiven Medien können die Glaselektroden stabil betrieben werden, jedoch ist die Stabilität derselben in starken alkalischen Lösungen eingeschränkt. Ferner ist ein Einsatz von Glaselektroden in Flusssäure ungebräuchlich. Das Einstellen des Messwerts geschieht sehr langsam. Glaselektroden erfordern bei deren Herstellung einen hohen Anteil von Handarbeit, wodurch dieselben teuer sind. Ferner ist das Anwendungsgebiet von Glaselektroden eingeschränkt, da dieselben bei einem Bruch Splitter erzeugen. Beispielsweise ist ein Einsatz von Glaselektroden in der Lebensmitteltechnik nicht möglich, da die bei einem Bruch entstehenden Splitter gefährliche Fremdkörper in einem Lebensmittel darstellen. Glaselektroden werden vorzugsweise in der Prozessmesstechnik eingesetzt.

Ferner besteht aus technischen Gründen, insbesondere weil ein entsprechend großes Innenpuffervolumen bei einer ausreichend ausgelegten Innenableitung, meist eine Ag/AgCl-Anordnung, analog einer Bezugselektrode erforderlich ist, keine Möglichkeit der effizienten Miniaturisierung der Glaselektroden. Bei einem ionensensitiven Feldeffekttransistor entfällt der Innenpuffer und dieses zweite Ableitungssystem.

Darüber hinaus ist das auf Glaselektroden basierende pH-Messsystem aufgrund der notwendigen Glasmembrandicke ein System mit einer hohen Impedanz und damit auf Umweltstörungen empfindlich. Deshalb sollten die Messleitungen stets geschirmt sein und der Abstand der Elektroden minimal gehalten werden.

Im Gegensatz zu den Glaselektroden stellt die Verwendung von ionensensitiven Feldeffekttransistoren eine bruchsichere Alternative zur ionensensitiven Messung in Flüssigkeiten dar, so dass dieselben in Bereichen, bei denen betriebssichere Zusatzanforderungen verlangt sind, wie beispielsweise in der Lebensmitteltechnik, eingesetzt werden können. Die Anwendung der ionensensitiven Feldeffekttransistoren für die Ionenkonzentrationsmessung, insbesondere zur Messung des pH-Werts ist seit langem bekannt, siehe beispielsweise P. Bergveld, IEEE Trans.Biomed.E17 (1979), S.70. Diese Sensoren sind ferner für die Miniaturisierung des Messsystems, die Herstellung integrierter Systeme und für eine kostengünstige Fertigung geeignet und in diesen Punkten der konventionellen Glaselektrode überlegen.

Typischerweise wird bei einer Messung mit einem ionensensitiven Feldeffekttransistor dessen Gate in Berührung mit dem Messfluid gebracht. Eine Potenzialänderung an dem Gate, die durch eine Änderung einer Ionenkonzentration in dem Messfluid erzeugt wird, führt zu einem Messsignal. Da bei der Messung das Gate direkt mit der Messflüssigkeit in Berührung kommt, müssen für den Einsatzbereich in aggressiven Medien, wenn eine hohe Langzeitstabilität und/oder wenn eine geringe Drift erforderlich ist, Gatematerialien eingesetzt werden, die über längere Zeiten widerstandsfähig gegen das jeweilige Messmedium sind.

Zur Herstellung wasserstoffionenempfindlicher Schichten wurden bereits verschiedene Materialien, wie Si₃N₉, Al₂N₃, ZrO₂, Ta₂O₅ und Diamant-ähnlicher Kohlenstoff (DLC= Diamond like Carbon) untersucht. Beschreibungen derartiger Sensoren finden sich beispielsweise in Van der Schoot et.al, Sensors & Actuators 4 (1983), S. 267, D. Sobczynska et al., Sensors & Actuators 6 (1984), S 93, M. Klein et al., VDI-Berichte 509 (1983), S. 275 und T. Sakai et al., Internat. Electron Devices Meeting, Techn. Digest (1987), S. 711.

Ionensensitive Feldeffekttransistoren mit einem Gate aus Si₃N₄ eignen sich für einen Einsatz bei den oben genannten Anforderungen nur bedingt, da das Gate aus Si₃N₄ einer hohen Drift unterworfen ist und eine geringen Langzeitstabilität aufweist. Ferner sind die ionensensitiven Feldeffekttransistoren mit einem Gate aus Si₃N₄ in aggressiven Medien nicht über einen längeren Zeitraum einsetzbar.

Verglichen mit Si₃N₄ als Gatematerial können durch die Verwendung von Metalloxiden als Gatematerial verbesserte Eigenschaften von ionensensitiven Feldeffekttransistoren hinsichtlich einer pH-Empfindlichkeit, einer Langzeitstabilität einer Lichtempfindlichkeit und einer Drift erreicht werden.

Aufgrund der kristallinen Struktur der Metalloxide nach Temperaturbelastungen sind die Einschwingzeiten dieser Sensoren gegenüber den ionensensitiven Feldeffekttransistoren aus normalerweise amorphen Si₃N₄ größer. Ionensensitive Feldeffekttransistoren mit einem Metalloxid-Gate weisen ferner den Nachteil auf, dass dieselben gegenüber basischen Lösungen mit höheren Temperaturen und gegenüber Flusssäure keine ausreichende Beständigkeit aufweisen. Ferner wird im Stand der Technik Temperaturbehandlungen von Metalloxiden zur Verbesserung der chemischen Stabilität eines ionensensitiven Feldeffekttransistors auf Metalloxid-Basis durchgeführt. Dabei werden kristalline Modifikationen gebildet, wobei jedoch an den Korngrenzen Schwachstellen entstehen, die wiederum Ioneneindiffusionen begünstigen, die eine Drift erhöhen oder die Lichtempfindlichkeit verschlechtern können.

In neueren Entwicklungen werden ionensensitive Feldeffekttransistoren verwendet, bei denen als Gatematerial amorpher diamantartiger Kohlenstoff (DLC; DLC = "diamond like carbon") verwendet wird, der einen hohen Anteil an sp³ hybridisierten Kohlenstoff-Bindungen aufweist. Derartige Systeme weisen eine sehr hohe chemische Beständigkeit auf, insbesondere in Flusssäure. Ein Nachteil der Verwendung von amorphen diamantartigem Kohlenstoff besteht jedoch darin, dass Schichten aus diesem Material eine hohe Eigenspannung aufweisen, die die Schichthaftung vermindern und zu einem Abplatzen der Schichten und folglich zu einer Zerstörung des ionensensitiven Feldeffekttransistors führen können. Des weiteren können Phasengrenzen zu langen Einschwingzeiten des Messsignals führen. Daher sind diese ionensensitiven Feldeffekttransistoren für eine langzeitliche Verwendung in allen Einsatzbereichen nicht geeignet.

Die im Stand der Technik verwendeten Schichtmaterialien erfordern für die Herstellung stabiler Transistoren im Kanal ein Doppelschichtsystem, bestehend aus SiO₂ und der sensitiven Schicht, um eine stabile mit minimalen Ladungszentren versehen Grenzfläche zum Silizium zu erreichen. Damit verbunden ist ein erhöhter Produktionsaufwand für die Sensorchips und aufgrund der kritischen Grenzflächen eine verringerte Ausbeute.

Die DE 195 14 251 C beschreibt einen Feldeffekttransistor zur Messung einer Ionenkonzentration und ein Verfahren zu dessen Herstellung, der ein Gate bestehend aus einem Natriumalumosilikatfim aufweist.

US 6,479,404 A offenbart einen MOS FET mit einem Gate-Isolator bestehend aus Metallsilikat.

Ausgehend von diesem Stand der Technik besteht die Aufgabe der vorliegenden Erfindung darin, einen preisgünstigen, sicheren und langzeitlich stabilen ionensensitiven Feldeffekttransistor und ein Verfahren zum Herstellen desselben zu schaffen.

Diese Aufgabe wird durch einen ionensensitiven Feldeffekttransistor nach Anspruch 1 und ein Verfahren nach Anspruch 2 gelöst.

Die vorliegende Erfindung basiert auf der Erkenntnis, dass ein ionensensitiver Feldeffekttransistor mit einer hohen Stabilität und hoher Empfindlichkeit sowie einer geringen Drift bei einer guten Langzeitstabilität erreicht wird, indem als Gate-Material ein Metallsilikat gemäß Anspruch 1 verwendet wird. Die durch die Verwendung dieser Metallsilikate als Gate-Material erhaltene Stabilität und Empfindlichkeit gegenüber einem zu detektierenden Ion ist dabei zu denjenigen von Metalloxiden vergleichbar.

Ein Vorteil des erfindungsgemäßen ionensensitiven Feldeffekttransistors besteht darin, dass eine geringe Querempfindlichkeit, insbesondere gegenüber Alkaliionen, vorliegt. Aufgrund der Struktureigenschaften der Metallsilikate, ausgedrückt durch einen größeren "band gap" verglichen mit Metalloxiden, wird eine geringere UV-Licht-induzierte Drift hervorgerufen.

Durch die Verwendung von Silikaten von Hafnium und Zirkonium, wird ferner eine hohe chemische Stabilität des ionensensitiven Feldeffekttransistors erreicht.

Die erhöhte chemische Stabilität gegenüber einem ionensensitiven Feldeffekttransistor mit einem Gate aus Metalloxid ergibt sich dabei aufgrund der hohen Bindungsfestigkeit des Metallsilikats, ausgedrückt durch die freie Enthalpie und den Bandgapabstand.

Durch die hohe chemische Stabilität steht für Sensoren mit Metallsilikat-Gate gemäß Anspruch 1 ein breiter Einsatzbereich, beispielsweise in der pH-Messtechnik, zur Verfügung.

Im Unterschied zu den bekannten ionensensitiven Feldeffekttransistoren mit einem Gate aus Si₃N₄, Metalloxid oder diamantartigem Kohlenstoff, bei denen eine Doppelschichtstruktur im Transistorkanal mit einer isolierenden Schicht und einer sensitiven Schicht erforderlich ist, kann beim Einsatz von Metallsilikaten, und insbesondere von Hafniumsilikat und/oder Zirkoniumsilikat, als sensitive Schicht die sonst notwendige Isolatorschicht SiO₂ unter der sensitiven Schicht sehr weit abgedünnt oder ganz auf diese verzichtet werden. Die Fertigung eines stabilen ionensensitiven Feldeffekttransistors mit diesen Materialien nach der einfachen Technologie beruht auf dem störstellenfreien Übergang von Silizium zu Metallsilikat.

Ferner wird durch die Verwendung von Metallsilikaten gemäß Anspruch 1 als Gate-Material neben den verbesserten Sensoreigenschaften auch eine gute Reproduzierbarkeit der Transistorparameter erreicht. Die Reproduzierbarkeit der Transistorparameter ist für die Anwendung der ISFET-Sensoren von entscheidender Bedeutung. Dadurch kann der ionensensitive Feldeffekttransistor auf Metallsilikat-Basis gemäß Anspruch 1 als ein preiswerter hochstabiler Sensor beispielsweise für einen Einsatz in der industriellen Prozessmesstechnik und in der Umweltüberwachung erreicht werden.

Ferner kann bei Einhaltung der chemischen Stabilität der sensitiven Schicht der Arbeitspunkt des Sensors so gelegt werden, dass die Ionenbewegung im elektrischen Feld während des Sensorbetriebs minimiert wird. Dies verringert ferner die feldgestützte Eindiffusion von Ionen in den Gate-Isolator. Das Ausführungsbeispiel mit einem Einschichtaufbau über dem Kanal ermöglicht einen reproduzierbaren, ohne störende Grenzfläche behafteten Sensor, der eine minimale Einschwingdauer aufweist.

Die Transistorparameter bestimmen die Arbeitspunktlage des Sensors und die Streuung der Sensorparameter. Die Grundlage von homogenen Transistorparametern ist die Beherrschung der Isolatorgrenzflächen zum Silizium und bei Mehrfachschichten zwischen den Schichten. Mit der Möglichkeit der Herstellung von Einfachschichten entfallen somit die kritischen Grenzflächen von Mehrfachschichten. Die im Einschichtgate-Isolator ausschließlich bestimmende Grenzfläche ist die des Silikats zum Silizium. Diese ist bei dem Metallsilikat durch die Ähnlichkeit der atomaren Bindungszustände des Silikats mit dem amorphen SiO₂ gekennzeichnet, was zu weitestgehend spannungs- und defektfrei ausgebildeten Grenzflächen führt.

Andererseits sind die Silikate des Zirkoniums und des Hafniums in Kontakt mit SiO₂ und Silizium thermodynamisch stabil, so dass keine Silizidbildung eintritt. Damit werden sowohl die Drift als auch die chemische Stabilität verbessert.

Darüber hinaus können durch die Variierbarkeit der Verhältnisse des Metalls zum Silizium in den Silikaten Schichten mit kristalliner bis amorpher Struktur erzeugt werden. Damit kann das Ansprechverhalten der Sensoren verglichen mit demjenigen der metalloxidischen ionensensitiven Feldeffekttransistoren verbessert werden.

Der in einem Einschichtaufbau realisierte ionensensitive Feldeffekttransistor reduziert ferner die erforderliche Teilschrittanzahl bei einem Herstellungsprozess, wodurch die Herstellungskosten gesenkt werden.

Bei diesem Ausführungsbeispiel kann somit die Grenzflächenzahl verringert werden, wobei die Möglichkeit besteht, die Schicht über dem Kanal in einer geringen Dicke auszuführen. Dadurch wird eine einfache und preisgünstige Herstellung erreicht.

Das Erzeugen des Gates aus Metallsilikat auf dem Substrat kann durch ein Sputtern oder CVD-Abscheiden oder Dampfen des Metallsilikats, durch ein Sputtern oder CVD-Abscheiden oder Dampfen eines Metalls mit nachfolgendem Silikatisieren des Metalls oder ein Sputtern oder CVD-Abscheiden oder Dampfen eines Metalls mit nachfolgendem Silizieren des Metalls und nachfolgendem Oxidieren erfolgen.

Ferner kann ein Tempern zum Einstellen von Sensoreigenschaften oder ein sonstiges Nachbehandeln zum Einstellen einer Struktureigenschaft des Gates durchgeführt werden. Das Tempern kann bei Temperaturen größer als 500° C unter Inert-Atmosphäre, wie beispielsweise unter N₂ oder Edelgasen und/oder mit oxidierend wirkenden Gaskomponenten durchgeführt werden kann. Die Struktureigenschaft des Gates kann dadurch auf eine vorbestimmte Eigenschaft zwischen amorph und kristallin eingestellt werden.

Vorzugsweise wird die Schichtherstellung in Halbleiterprozessen mittels einer CMOS-kompatiblen Technik, d.h. beispielsweise einer Planartechnik, durchgeführt, wobei weitere, auf dem Chip integrierte Schaltungselemente, die beispielsweise zur Erfassung von Messdaten verwendet werden, zusammen mit dem ionensensitiven Feldeffekttransistor erzeugt werden können. Dadurch wird eine preiswerte Herstellung erreicht. Ein weiterer Vorteil der vorliegenden Erfindung besteht darin, dass der erfindungsgemäße ionensensitive Feldeffekttransistor auf eine sichere Weise, d.h. ohne die Gefahr eines Erzeugens von Splittern bei einem Zerbrechen, betrieben werden kann, wodurch er sich für Einsatzbereiche, die eine hohe Betriebssicherheit erfordern, wie beispielsweise für die Lebensmitteltechnik, eignet.

Der erfindungsgemäße ionensensitive Feldeffekttransistor mit einem Gate aus Metallsilikat ist ferner umweltverträglich, d.h., dass ein Einsatz, beispielsweise in der Lebensmitteltechnik, ohne weiteres möglich ist.

Bevorzugte Ausführungsbeispiele der vorliegenden Erfindung werden nachfolgend unter Bezugnahme auf die beiliegende Zeichnung näher erläutert. Es zeigt:

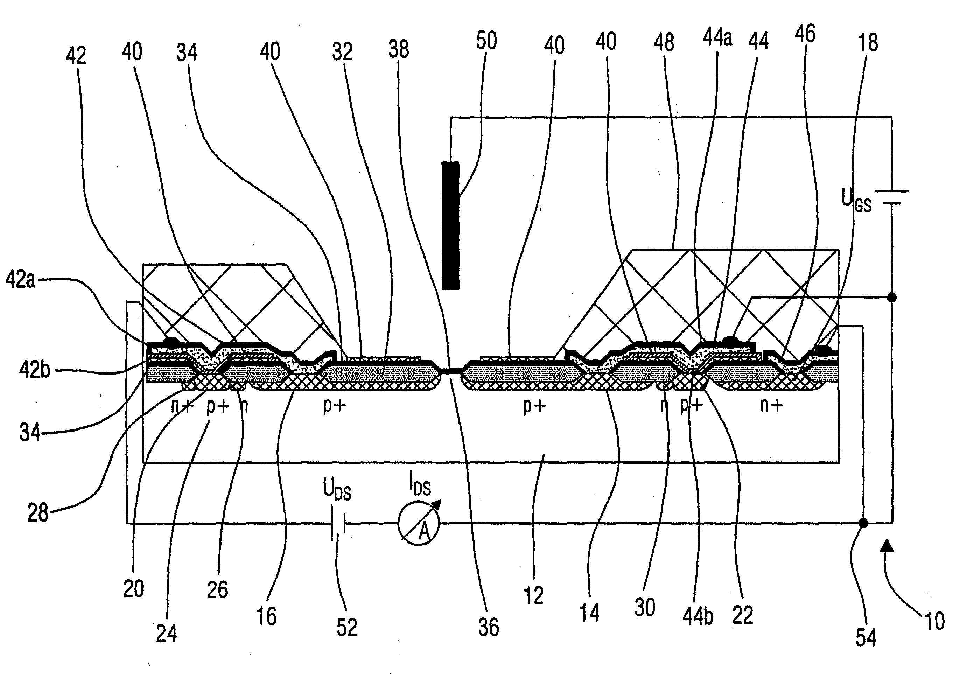

- Fig. 1: eine Querschnittdarstellung eines ionensensitiven Feldeffekttransistors gemäß einem bevorzugten Ausführungsbeispiels der vorliegenden Erfindung.

Fig. 1 zeigt einen ionensensitiven Feldeffekttransistor (FET) gemäß einem Ausführungsbeispiel der vorliegenden Erfindung. Der FET 10 umfasst ein Halbleiter-Substrat 12, beispielsweise ein Siliziumsubstrat. Bei dem Substrat 12 kann es sich um eine Kombination aus einem Trägersubstrat und einer darauf aufgebrachten Epitaxieschicht handeln, in der die aktiven Bereiche des Bauelements gebildet werden.

In dem Substrat 12 ist ein p⁺-Source-Bereich 14 und ein p⁺-Drain-Bereich 16 gebildet. In dem Substrat 12 ist ferner ein Substratanschlussbereich 18 gebildet, der eine n⁺-Dotierung zum Bilden eines Ohmschen Kontakts aufweist.

Das Substrat 12 umfasst ferner p⁺-Bereiche 20 und 22, die jeweils zum Bilden eines aktiven Bipolar-Bauelements dienen. Der p⁺-dotierte Bereich 20 stellt einen Basisbereich eines Bipolar-Transistors 24 dar. Der Bipolar-Transistor 24 weist einen n-dotierten Kollektorbereich 26 und einen n⁺-dotierten Emitterbereich 28 auf, die jeweils seitlich an dem Basisbereich 20 angeordnet sind.

Ferner stellt der p⁺-dotierte Bereich 22 und ein an denselben angrenzender n-dotierter Bereich 30 eine Diode als ein weiteres Bipolar-Bauelement auf dem Substrat 12 dar.

Auf einer Oberfläche des Substrats 12 ist eine Feldoxidschicht 32 gebildet. Auf der Feldoxidschicht 32 ist eine Gate-Schicht 34 angeordnet, die sich ferner über einen zwischen dem Source-Bereich 14 und dem Drain-Bereich 16 gebildeten Kanalbereich 36 erstreckt. Ein Abschnitt der Oberfläche des Substrats 12 oberhalb des Kanalbereichs 36 liegt frei, d.h., dass derselbe nicht durch die Feldoxidschicht 32 bedeckt ist. In diesem freiliegenden Bereich ist durch die Gate-Schicht 34, die bei diesem Ausführungsbeispiel direkt auf dem Kanalbereich angeordnet ist, ein Gate 38 gebildet, das die erfindungsgemäßen Metallsilikate aufweist.

Die Verwendung von Metallsilikaten gemäß Anspruch 1 als Gate-Material ermöglicht, dass der Feldeffekttransistor bei diesem Ausführungsbeispiel mit einer Einfach-Schicht im Kanalbereich hergestellt werden kann. Das heißt, dass zwischen der Messflüssigkeit und dem Kanalbereich lediglich die Schicht aus Metallsilikat vorhanden ist. Dabei ist die Schicht aus Metallsilikat sowohl der Gate-Isolator als auch die sensitive Schicht.

Auf der Gate-Schicht 34 ist ferner in den Bereichen der Feldoxidschicht 32 eine weitere isolierende Schicht 40 gebildet. Der Feldeffekttransistor 10 umfasst ferner einen Anschlusskontakt 42, z.B. aus Aluminium, der sich durch die Feldoxidschicht 32 und die isolierenden Schichten 34 und 40 erstreckt und mit dem Drain-Bereich 16 und dem Basisbereich 20 verbunden ist. Der Anschlusskontakt 42 umfasst eine erste Kontaktschicht 42a und eine darüber angeordnete Kontaktschicht 42b. Die erste Kontaktschicht 42a liefert eine gute elektrische Verbindung mit den Bereichen 16 und 20, während die darüber angeordnete Kontaktschicht 42b eine gute Lötbarkeit für elektrische Anschlüsse sicherstellt.

Ferner umfasst der ionensensitive Feldeffekttransistor 10 einen zweiten Anschlussbereich 44 mit ebenfalls zwei Schichten 44a und 44b, die sich durch die Feldoxidschicht 32 und die isolierenden Schichten 34 und 40 erstrecken, so dass der zweite Anschlussbereich 44 mit dem Source-Bereich 14 und dem Bereich 22 verbunden ist.

Ein dritter Anschlussbereich 46 ist ferner mit dem Substratanschlussbereich 18 verbunden.

Über den Anschlusskontakten 42, 44 und 46 ist eine Schutzschicht 48 gebildet, um bei einem Eintauchen des ionensensitiven Feldeffekttransistors in ein Messmedium eine elektrische Isolierung derselben gegenüber dem Messmedium zu erreichen. Ferner liefert die Schutzschicht 48 einen mechanischen Schutz für die Anschlusskontakte 42, 44 und 46.

Der Feldeffekttransistor mit einem Gate 38 aus Metallsilikat weist aufgrund der hohen Bindungsfestigkeit eine verglichen mit einem Gate aus Metalloxid höhere chemische Stabilität auf. Dadurch weist das Gate 38 aus Metallsilikat gemäß Anspruch 1 eine hohe Widerstandsfähigkeit gegenüber chemisch aggressiven Substanzen auf, so dass der ionensensitive Feldeffekttransistor 10 in aggressiven chemischen Medien, wie beispielsweise Flusssäure, mit großer Beständigkeit betrieben werden kann. Ferner zeichnet sich der erfindungsgemäße ionensensitive Feldeffekttransistor durch eine hohe Langzeitstabilität und geringe Drift aus.

Bei dem oben beschriebenen Feldeffekttransistor 10 wird ein Einschicht-Gate-Aufbau verwendet, d.h. die Gate-Schicht 34, die in dem Kanalbereich 36 das Gate 38 bildet, ist sowohl der Gate-Isolator als auch die sensitive Schicht.

Zur Bildung der Gate-Schicht 34 als Material Hafniumsilikat und/oder Zirkoniumsilikat verwendet, da sich dieselben durch eine besonders hohe chemische Stabilität auszeichnen.

Mit der Verwendung von Silikaten werden ferner die besonders bei ionensensitiven Feldeffekttransistoren mit Metalloxid-Gate durch die Temperaturbehandlungen erzeugten nachteiligen Eigenschaften einer erhöhten Drift und geringen Lichtempfindlichkeit behoben.

Vorzugsweise wird der erfindungsgemäße ionensensitive Feldeffekttransistor in einem CMOS-Prozess hergestellt, wodurch ein preisgünstiges Herstellen desselben ermöglicht ist. Typischerweise werden dabei mehrere ionensensitive Feldeffekttransistoren in einem Waferverbund auf 150 mm Halbleiterwafern gefertigt. Daraufhin werden Chips, die beispielsweise eine Fläche von etwa 4 mm x 4 mm umfassen, vereinzelt auf Platinen befestigt und elektrisch kontaktiert. Zum Herstellen eines Meßsystems wird ein Chip anschließend in einen geeigneten Aufbau überführt. Typischerweise stellte ein Messsystem, bei dem der ionensensitive Feldeffekttransistor eingebaut wird, einen Eintauchsensor dar, der beispielsweise zum Erfassen eines pH-Werts in Industrieabwässern eingesetzt werden kann.

Die Gate-Schicht aus Metallsilikat gemäß Anspruch 1 wird bei bevorzugten Ausführungsbeispielen der vorliegenden Erfindung durch ein Sputtern des Metalls, des Metalloxids oder des Metallsilikats in einer Sauerstoff-SiₓH_{y}-Atmosphäre oder durch CVD-Abscheidung hergestellt. Zur Ausheilung und Modifizierung der Schichteigenschaften kann anschließend eine Temperaturbehandlung bei Temperaturen durchgeführt werden, die größer als 500° C sind, wobei dieselbe unter Inert-Atmosphäre oder mit oxidierend wirkenden Gaskomponenten durchgeführt werden kann.

Im folgenden wird nun ein Beispiel zur Verwendung des erfindungsgemäßen ionensensitiven Feldeffekttransistors erläutert. Bei diesem Beispiel wird eine Ionenkonzentrationsmessung unter Verwendung des ionensensitiven Feldeffekttransistors durchgeführt. Dazu wird der Feldeffekttransistor 10 in Kontakt mit einer Messflüssigkeit, die beispielsweise eine wässrige Lösung sein kann, gebracht. Zur Messung wird-ferner eine Referenzelektrode 50, die beispielsweise aus Ag / AgCl / KCl bestehen kann, in das Messmedium eingebracht. Über eine Spannungsquelle 52, die mit den Anschlusskontakten 42 und 44 verbunden ist, um eine elektrische Spannung U_{ds} zwischen den Source-Bereich 14 und den Drain-Bereich 16 anzulegen, wird ein Drain-Source-Strom I_{DS} bewirkt. Der Anschlusskontakt 18 liegt auf einem Bezugspotential 54, z.B. Masse.

Zwischen der Referenzelektrode 50 und dem Gate 38 bildet sich aufgrund einer unterschiedlichen elektrochemischen Spannungs-Wertigkeit der Materialien der Referenzelektrode 50 und des Gates 38 eine elektrische Spannung aus, die von einer Ionenkonzentration des Messmediums abhängt.

Bei einem bevorzugtem Ausführungsbeispiel ist die Spannungsquelle 52 ausgebildet, um die Drain-Source-Spannung so zu steuern, dass stets ein konstanter Drain-Source-Strom fließt. Bei diesem Ausführungsbeispiel wird folglich bei einer sich ändernden Ionenkonzentration das Gate-Potential durch den konstanten Drain-Source-Strom bestimmt und eingestellt. Ändert sich die Ionenkonzentration des Messmediums, so ändert sich aufgrund der sich ändernden elektrischen Spannung zwischen der Referenzelektrode 50 und dem Gate 38 das Potential der Referenzelektrode 50 bezüglich Masse. Dabei stellt die zwischen der Source und der Referenzelektrode 50 anliegende Spannung U_{GS} eine Messgröße dar, die von einer Ionenkonzentration des Messmediums abhängt, wodurch die Konzentration des Messmediums durch ein Abgreifen der Spannung U_{GS} ermittelt werden kann.

Obwohl bei den beschriebenen Ausführungsbeispielen lediglich ein Feldeffekttransistor mit einem p-Substrat, n-Source-Bereich und n-Drain-Bereich beschrieben wurde, ist die vorliegende Erfindung nicht darauf beschränkt, sondern umfasst auch Feldeffekttransistoren mit n-Substrat, p-Source-Bereich und p-Drain-Bereich.

## Patentansprüche

1. Ionensensitiver Feldeffekttransistor zur Messung einer Ionenkonzentration mit einem Gate (38) aus Zirkoniumsilikat oder Hafniumsilikat als Gate-Isolator und ionensensitive Schicht.

2. Verfahren zum Herstellen eines ionensensitiven Feldeffekttransistors zur Messung einer Ionenkonzentration mit folgenden Schritten:
Bereitstellen eines Substrats (12) mit einem Source-Bereich (14) und einem Drain-Bereich (16); und
Erzeugen eines Gates (38) aus Zirkoniumsilikat oder Hafniumsilikat als Gate-Isolator und ionensensitive Schicht.

3. Verfahren nach Anspruch 2, bei dem der Schritt des Erzeugens des Gates (38) ein Sputtern oder Dampfen oder ein CVD-Abscheiden des Zirkoniumsilikats oder Hafniumsilikats umfasst.

4. Verfahren nach Anspruch 2, bei dem der Schritt des Erzeugens des Gates (38) ein Sputtern von Zirkonium oder Hafnium und ein nachfolgendes Silikatisieren des Zirkoniums oder Hafniums umfasst.

5. Verfahren nach Anspruch 2, bei dem der Schritt des Erzeugens des Gates (38) folgende Schritte aufweist:
Sputtern von Zirkonium oder Hafnium;
nachfolgendes Silizieren des Zirkoniums oder Hafniums; und
nachfolgendes Oxidieren.

6. Verfahren nach einem der Ansprüche 2 bis 5, bei dem er Schritt des Erzeugens des Gates (38) ferner den Schritt eines Temperns umfasst.

7. Verfahren nach einem der Ansprüche 2 bis 6, bei dem der Schritt des Erzeugens des Gates (38) ferner ein Nachbehandeln zum Einstellen einer Struktureigenschaft des Gates umfasst.

8. Verfahren nach Anspruch 7, bei dem die Struktureigenschaft des Gates (38) zwischen amorph und kristallin eingestellt wird.

## Claims

1. An ion-sensitive field effect transistor for measuring an ionic concentration having a gate (38) of zirconium silicate or hafnium silicate as a gate insulator and ion-sensitive layer.

2. A method for producing an ion-sensitive field effect transistor for measuring an ionic concentration, comprising:
providing a substrate (12) having a source region (14) and a drain region (16); and
generating a gate (38) of zirconium silicate or hafnium silicate as a gate insulator and ion-sensitive layer.

3. The method of claim 2, wherein the step of generating the gate (38) includes sputtering or vapor depositing or CVD depositing of the zirconium silicate or hafnium silicate.

4. The method of claim 2, wherein the step of generating the gate (38) includes sputtering zirconium or hafnium and subsequently silicatizing the zirconium or hafnium.

5. The method of claim 2, wherein the step of generating the gate (38) comprises:
sputtering zirconium or hafnium;
subsequently siliconizing the zirconium or hafnium; and subsequent oxidizing.

6. The method of one of claims 2 to 5, wherein the step of generating the gate (38) further includes the step of tempering.

7. The method of one of claims 2 to 6, wherein the step of generating the gate (38) further includes a posttreatment for adjusting a structural property of the gate.

8. The method of claim 7, wherein the structural property of the gate (38) is adjusted between amorphous and crystalline.

## Revendications

1. Transistor à effet de champ pour la mesure d'une concentration en ions avec une porte (38) en silicate de zirconium ou en silicate de hafnium comme isolateur de porte et une couche sensible aux ions.

2. Procédé pour fabriquer un transistor à effet de champ pour la mesure d'une concentration en ions, aux étapes suivantes consistant à:
préparer un substrat (12) avec une zone de source (14) et une zone de drain (16); et
générer une porte (38) en silicate de zirconium ou en silicate de hafnium comme isolateur de porte et une couche sensible aux ions.

3. Procédé selon la revendication 2, dans lequel l'étape consistant à générer la porte (38) comprend un dépôt par pulvérisation ou une vaporisation ou un dépôt CVD du silicate de zirconium ou silicate de hafnium.

4. Procédé selon la revendication 2, dans lequel l'étape consistant à générer la porte (38) comprend un dépôt par pulvérisation de zirconium ou de hafnium et une silicatisation successive du zirconium ou du hafnium.

5. Procédé selon la revendication 2, dans lequel l'étape consistant à générer la porte (38) présente les étapes suivantes:
dépôt par pulvérisation de zirconium ou de hafnium;
silicatisation successive du zirconium ou du hafnium; et
oxydation successive.

6. Procédé selon l'une des revendications 2 à 5, dans lequel l'étape consistant à générer la porte (38) comprend par ailleurs l'étape de trempe.

7. Procédé selon l'une des revendications 2 à 6, dans lequel l'étape consistant à générer la porte (38) comprend par ailleurs un post-traitement en vue de régler une propriété de structure de la porte.

8. Procédé selon la revendication 7, dans lequel la propriété de structure de la porte (38) est réglée entre amorphe et cristalline.
